Europäisches Patentamt

European Patent Office

Office européen des brevets

(19)

(11) Veröffentlichungsnummer: **0 280 047**
B1

(12) # EUROPÄISCHE PATENTSCHRIFT

(45) Veröffentlichungstag der Patentschrift:
09.05.90

(21) Anmeldenummer: **88101061.5**

(22) Anmeldetag: **26.01.88**

(51) Int. Cl.⁵: **B26D 3/22**, B24D 5/12

(54) Trennvorrichtung zum Teilen von insbesondere tiefgefrorenen Lebensmittelblöcken, wie Fisch.

(30) Priorität: **27.02.87 DE 3706337**

(43) Veröffentlichungstag der Anmeldung:
**31.08.88 Patentblatt 88/35**

(45) Bekanntmachung des Hinweises auf die Patenterteilung:
**09.05.90 Patentblatt 90/19**

(84) Benannte Vertragsstaaten:
**AT BE CH DE ES FR GB GR IT LI LU NL SE**

(56) Entgegenhaltungen:
**DE-C- 3 512 488**
**FR-A- 431 646**

(73) Patentinhaber: **NIENSTEDT, Heinz, Zum Nonnenberg 8a,
D-4350 Recklinghausen(DE)**

(72) Erfinder: **NIENSTEDT, Heinz, Zum Nonnenberg 8a,
D-4350 Recklinghausen(DE)**

(74) Vertreter: **Patentanwaltsbüro Cohausz & Florack,
Postfach 14 01 20 Schumannstrasse 97,
D-4000 Düsseldorf 1(DE)**

## Beschreibung

Die Erfindung bezieht sich auf eine Trennvorrichtung aus einem oder mehreren nebeneinander und mit gegenseitigem Abstand auf einer Antriebswelle zwischen Spannflanschen gehaltenen kreisscheibenförmigen Trennelementen zum Teilen von insbesondere tiefgefrorenen Lebensmittelblöcken, wie Fisch, die jeweils radial zum Außenrand hin sich verjüngen und am Außenrand einen Doppelkragen mit einer scharfkantigen Oberfläche aufweisen.

Von solchen Trennvorrichtungen wird neben einer hohen Standzeit eine kleine Schnittbreite verlangt, weil der Materialverlust, der durch das Zerspanen des Materials an den Schnittstellen entsteht, möglicht gering sein soll. Um die aus diesem Grunde eingesetzten dünnen kreisscheibenförmigen Trennelemente, die von Hause aus keine hohe Eigensteifigkeit haben, steif zu machen, ist es bekannt, die Trennelemente bis auf einen verhältnismäßig schmalen äußeren Rand zwischen Flanschen einzuspannen. Der als Doppelkragen ausgebildete und als Schneidrand dienende Außenrand der Trennelemente weist eine scharfkantige Oberfläche auf, die von aufgeklebten Diamantpartikeln gebildet wird (DE 35 12 488 C2).

Mit einer solchen bekannten Trenvorrichtung konnten gute Schneidergebnisse erzielt werden. Ein Nachteil bei dieser Trennvorrichtung ist jedoch der hohe Herstellungsaufwand für die Trennelemente.

Der Erfindung liegt die Aufgabe zugrunde, für eine Trennvorrichtung der eingangs genannten Art Trennelemente zu schaffen, die bei guter Schneidleistung und langer Standzeit keinen im Vergleich zu den bekannten Trennelementen hohen Herstellungsaufwand erfordern.

Diese Aufgabe wird erfindungsgemäß bei einer Trennvorrichtung der eingangs genannten Art dadurch gelöst, daß jedes Trennelement, dessen an seinem Außenrand radial gestauchter Doppelkragen mit einer die scharfkantige Oberfläche bildenden Prägung in seiner peripheren Außenmantelfläche versehen ist, zumindest im Außenrandbereich aus gehärtetem Stahl besteht. Vorzugsweise ist die Prägung eine Rändelung.

Der Einsatz einer solchen Trennvorrichtung hat alle Erwartungen hinsichtlich der Schneidleistung und Standzeit übertroffen. Ihr Herstellungsaufwand ist gering, weil durch einfache mechanische Bearbeitung des konisch sich verjüngenden Randes der Doppelkragen mit seiner scharfkantigen Oberfläche herstellbar ist. Der Herstellungsaufwand für diese mechanische Oberflächenbearbeitung und die Härtung des Randes ist im Vergleich zu einem Trennelement mit aufgebrachten Diamentsplittern erheblich geringer. Schließlich weist das erfindungsgemäße Trennelement aufgrund seiner Formgebung eine hohe Eigensteifigkeit auf.

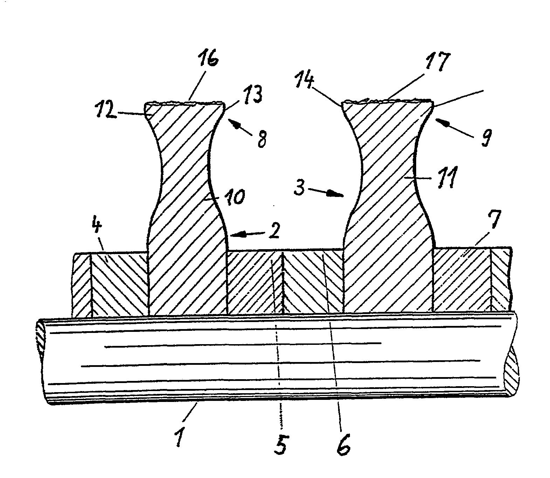

Im folgenden wird die Erfindung anhand einer ein Ausführungsbeispiel darstellenden Zeichnung näher erläutert. Die Zeichnung zeigt im axialen Halbschnitt zwei Trennelemente.

Auf einer Antriebswelle 1, die oberhalb eines nicht dargestellten Tisches sich befindet, über den die zu teilenden Blöcke transportiert werden, sitzen mit gegenseitigem Abstand kreisscheibenförmige Trennelemente 2,3 aus Stahl. Die Trennelemente 2,3 sind zwischen Flanschen 4,5,6 eingespannt und auf der Antriebswelle 1 festgeklemmt. Die Proportionen in der Zeichnung sind verzerrt. In Wirklichkeit sind die Trennelemente schlanker und die Flansche 4-7 reichen weiter zum Außenrand der Trennelemente 2,3, um ihnen eine ausreichende Eigensteifigkeit zu geben.

Jedes Trennelement 2,3 verjüngt sich radial zu seinem Außenrand 8,9 hin. Der sich verjüngende Bereich 10,11 ist radial gestaucht, wodurch am Außenrand 8,9 auf beiden Seiten des Elementes 2,3 jeweils ein Kragen 12,13,14,15 gebildet ist. Die Breite dieser Doppelkragen 12,13 bzw. 14,15 entspricht der Breite der Elemente 2,3 im Einspannbereich. Die periphere, zylindrische Außenmantelfläche 16,17 der Trennelemente 2,3 weist eine Prägung, insbesondere eine Rändelung auf, die die Oberfläche scharfkantig macht. Zumindest in seinem verjüngten Bereich 11,12 und am Rand 8,9 ist jedes aus Stahl bestehende Trennelement 2,3 gehärtet.

Mit den erfindungsgemäßen Trennelementen 2,3 läßt sich wegen der gehärteten scharfkantigen Oberfläche tiefgefrorener Fisch mit wegen der Zerspanung im Schnittbereich nicht zu vermeidendem, aber geringem Materialverlust teilen.

## Patentansprüche

1. Trennvorrichtung aus einem oder mehreren nebeneinander und mit gegenseitigem Abstand auf einer Antriebswelle zwischen Spannflanschen gehaltenen kreisscheibenförmigen Trennelementen (2, 3) zum Teilen von insbesondere tiefgefrorenen Lebensmittelblöcken, wie Fisch, die jeweils radial zum Außenrand hin sich verjüngen und am Außenrand (12, 13, 14, 15) einen Doppelkragen mit einer scharfkantigen Oberfläche aufweisen, dadurch gekennzeichnet, daß jedes Trennelement (2,3), dessen an seinem Außenrand (8,9) radial gestauchter Doppelkragen (12,13,14,15) mit einer die scharfkantige Oberfläche bildenden Prägung in seiner peripheren Außenmantelfläche (16,17) versehen ist, zumindest im Außenrandbereich (10,11;8,9) aus gehärtetem Stahl besteht.

2. Trennvorrichtung nach Anspruch 1, dadurch gekennzeichnet, daß die Prägung eine Rändelung ist.

## Claims

1. A parting device comprising one or more disc-shaped parting elements (2, 3) retained spaced out one beside the other between clamping flanges on a driving shaft, for the parting of deep-frozen blocks of foodstuffs, such as fish, the clamping elements each tapering radially in the direction of the outer edge (12, 13, 14, 15), which has a double collar having a sharp-edged surface, characterized in that each parting element (2, 3), whose double collar (12, 13, 14, 15), radially upset at its outer edge (8, 9), has in its peripheral outer generated surface (16, 17) an embossing forming the sharp-edged surface, is made of hardened steel, at least in the zone (10, 11; 8, 9) of the outer edge.

2. A parting device according to claim 1, characterized in that the embossing is a knurling.

## Revendications

1. Dispositif séparateur avec un ou plusieurs éléments séparateurs (2, 3) en forme de disques circulaires disposés côte-à-côte et à écartement relatif sur un arbre moteur et maintenus entre des flaques de tension, pour diviser des blocs de produits alimentaires en particulier surgelés, comme du poisson, qui chacun se rétrécissent radialement en direction du bord extérieur et présentent sur le bord extérieur (12, 13, 14, 15) un double collet avec une surface à arêtes vives, caractérisé en ce que chaque élément séparateur (2, 3), dont le double collet (12, 13, 14, 15) refoulé radialement sur son bord extérieur (8, 9), est muni d'un estampage dans sa surface d'enveloppe extérieure périphérique (16, 17), formant la surface à arêtes vives, est constitué, au moins dans la zone de bord extérieur (10, 11; 8, 9), d'acier trempé.

2. Dispositif séparateur selon la revendication 1, caractérisé en ce que l'estampage est un moletage.